# EUROPEAN PATENT SPECIFICATION

(11) **EP 4 312 200 B1**
(45) Date of publication and mention of the grant of the patent: **29.10.2025**
(21) Application number: 22216221.6
(22) Date of filing: 22.12.2022
(51) Int. Cl.: G07F 19/00

(54) **SKIMMER DETECTION AND MITIGATION**
SKIMMERDETEKTION UND -ABSCHWÄCHUNG
DÉTECTION ET ATTÉNUATION D'ÉCUMEUR

(30) Priority: 29.07.2022 US 202217876796
(43) Date of publication of application: 31.01.2024
(73) Proprietor: Cardtronics USA, Inc., Atlanta, GA 30308 (US)
(72) Inventor: WHYTOCK, Alexander, Blairgowrie, PH10 6TL (GB); BROOKES, Gregory, Glasgow, G14 0DA (GB); SLEEMAN, David, Dundee, DD5 3TX (GB)
(74) Representative: Secerna LLP

(56) References cited:
- EP-A1- 3 916 689
- US-A1- 2006 169 764
- US-A1- 2016 034 899

## Description

### SUMMARY

Disclosed are systems and methods for detecting a skimmer located proximate a card reader of a self-service terminal (SST). The systems and methods may include obtaining a baseline measurement for a plurality of sensors located proximate the card reader and activating a subset of the plurality of sensors. A signal may be received from each of the subset of the plurality of sensors that were activated. When the signal from each of the subset of the plurality of sensors deviate from the baseline measurement by a predetermined threshold, a determination may be made that the skimmer is proximate the card reader. In response to determining that the skimmer is located proximate the card reader, the self-service terminal may be disabled.
European patent application published under number 3 916 689 describes a system for detecting a foreign object such as a skimmer placed adjacent to a bezel for a magnetic card reader device, as used in automatic teller machines and gas pumps.
US patent application published under number 2016/034899 describes a system for detecting fraud including flowing alternating electrical current through a sensor coil to generate a magnetic field and measuring at least one electrical characteristic of the sensor.
US patent application published under number 2006/169764 describes a self-service terminal comprising a first sensor for sensing a first condition at the self-service terminal and a second sensor for sensing a second condition at the self-service terminal.

According to a first aspect of the present invention, there is provided a method for detecting a skimmer located proximate a card reader of a self-service terminal (SST), the method comprising:
obtaining a baseline measurement for a plurality of sensors located proximate the card reader;
activating a subset of the plurality of sensors;
receiving a signal from each of the subset of the plurality of sensors that were activated;
determining that the skimmer is located proximate the card reader when the signal from each of the subset of the plurality of sensors deviates from the baseline measurement by a predetermined threshold; and
disabling the self-service terminal in response to determining that the skimmer is located proximate the card reader;
wherein obtaining the baseline measurement comprises receiving a signal from each of the sensors, the signal from each of the sensors representing the baseline measurement.

In certain embodiments, the baseline measurement comprises a capacitance value for each of the plurality of sensors.

In certain embodiments, the predetermined threshold comprises a change in a capacitance measure over a predetermined time.

In certain embodiments, activating the subset of the plurality of sensors comprises activating the subset of the plurality in a round robin manner.

In certain embodiments, disabling the self-service terminal comprises disabling the card reader.

In certain embodiments, the method further comprises transmitting an alert message.

In certain embodiments, the method further comprises filtering noise from the signal received from each of the subset of the plurality of sensors.

In certain embodiments, the subset of the plurality of sensors is one of a plurality of subsets of the sensors, each of the plurality of subsets of corresponding to a different test pattern.

According to a second aspect of the present invention, there is provided a skimmer detection system comprising:
a processor; and
a memory storing instructions that, when executed by the processor, causes the processor to perform actions comprising:
   obtaining a baseline measurement for a plurality of sensors located proximate a card reader of a self-service terminal;
   activating a subset of the plurality of sensors;
   receiving a signal from each of the subset of the plurality of sensors that were activated;
   determining that a skimmer is located proximate the card reader when the signal from each of the subset of the plurality of sensors deviates from the baseline measurement by a predetermined threshold; and
   disabling the self-service terminal in response to determining that the skimmer is located proximate the card reader;
   wherein obtaining the baseline measurement comprises receiving a signal from each of the sensors, the signal from each of the sensors representing the baseline measurement.

In certain embodiments, the baseline measurement comprises a capacitance value for each of the plurality of sensors.

In certain embodiments, the predetermined threshold comprises a change in a capacitance measure over a predetermined time.

In certain embodiments, activating the subset of the plurality of sensors comprises activating the subset of the plurality in a round robin manner.

In certain embodiments, the skimmer detection system further comprises transmitting an alert message.

In certain embodiments, the skimmer detection system further comprises filtering noise from the signal received from each of the subset of the plurality of sensors.

According to a third aspect of the present invention, there is provided a self-service terminal (SST) comprising:
a card reader;
a plurality of sensors located proximate the card reader;
a processor in electrical communication with the plurality of sensors; and
a memory storing instructions that, when executed by the processor, causes the processor to perform actions comprising:
   receiving a baseline measurement for the plurality of sensors;
   activating a subset of the plurality of sensors;
   receiving a signal from each of the subset of the plurality of sensors that were activated;
   determining that a skimmer is located proximate the card reader when the signal from each of the subset of the plurality of sensors deviates from the baseline measurement by a predetermined threshold over a predetermined time; and
   disabling the self-service terminal and transmitting an alert message in response to determining that the skimmer is located proximate the card reader;
   wherein receiving the baseline measurement comprises receiving a signal from each of the sensors, the signal from each of the sensors representing the baseline measurement.

In certain embodiments, the plurality of sensors comprises a plurality of capacitance sensors and the baseline measurement comprises a capacitance value for each of the plurality of capacitance sensors.

In certain embodiments, activating the subset of the plurality of sensors comprises activating the subset of the plurality in a round robin manner.

In certain embodiments, the self-service terminal further comprises filtering noise from the signal received from each of the subset of the plurality of sensors.

### BRIEF DESCRIPTION OF THE FIGURES

In the drawings, which are not necessarily drawn to scale, like numerals can describe similar components in different views. Like numerals having different letter suffixes can represent different instances of similar components. The drawings illustrate generally, by way of example, but not by way of limitation, various embodiments discussed in the present document.
FIG. 1 shows an example schematic of a self-service terminal consistent with at least one example of this disclosure.
FIGS. 2A and 2B each shows an example skimmer detection component of a self-service terminal consistent with at least one example of this disclosure.
FIGS. 3A through 3L each shows a sensor pattern consistent with at least one example of this disclosure.
FIG. 4 shows an example method consistent with at least one example of this disclosure.
FIG. 5 shows an example of a round robin sampling of various sensor patterns consistent with at least one example of this disclosure.

Corresponding reference characters indicate corresponding parts throughout the several views. The exemplifications set out herein illustrate exemplary embodiments of the disclosure, and such exemplifications are not to be construed as limiting the scope of the disclosure any manner.

### DETAILED DESCRIPTION

Disclosed herein are systems and methods for protection against skimming devices being placed on self-service terminals (SSTs). Skimming devices are used by criminals to steal card information when unsuspecting users swipe their cards. The skimming devices read the information from the magnetic strip on cards as users swipe their cards. The criminals can then use the information to make duplicate cards, make fraudulent online purchases, and/or sell the information on the dark web.

The systems and methods disclosed herein may allow for detection of a skimming device, sometimes called a skimmer, that is place on or proximate a card reader of SSTs. As disclosed herein, software, sometimes referred to as a "driver" may command firmware to sample one or more sensors, sometimes referred to as a "pattern." The pattern may be a subset of a plurality of sensors. For example, if there are seven sensors, the pattern selected may be every odd sensor, every even sensor, two sensors located directly across from one another, or any other combination of sensors. The various patterns can be preprogrammed patterns and/or patterns generated at random.

The driver can select and/or generate a pattern to be sampled by commanding the firmware. As a non-limiting example, a round robin approach can be implemented to sample data for each pattern on a regular basis. For instance, a variety of preprogrammed patterns may be programmed into the driver and/or firmware. Upon execution, the driver may command the firmware to sample the various patterns in a round robin fashion.

The firmware may sample the pattern and report the sampled data to the driver. The driver may then process the sampled pattern. The raw data from each of the sampled patterns may be processed to yield an average value (level) for that round.

A calibration event, under supervised control, may be used to create an averaged level, sometimes referred to as a baseline or default baseline, for each sensor and/or pattern. A second baseline, sometimes referred to as an active baseline, may be set equal to default baseline. Due to environmental changes, especially temperature, the level drift away from the active baseline and hence the active baseline is updated continuously. For example, every ten minutes the default baseline may be set to the active baseline value. Thus, during the day when temperatures change, the baseline value may be updated to account for natural and/or expected environmental changes that may occur. As disclosed herein, the active baseline may be tracked so long as there is no skimmer detected, rain compensation is not activated, and/or the signal is below a fixed rain stability. Until a new default baseline calibration event, the level for each sensor and/or pattern may be measured against the active baseline for that sensor and/or pattern.

A noisy level may occur due to consumer activity and/or rain. Therefore, each sensor and/or pattern stability may be measured. For example, the stability may be a standard deviation of 80 samples of the baseline level in current use. Active baseline trend and level analysis may be adjusted to accommodate the noise, such as small deviations that may be caused by rain.

As disclosed herein, for each round and/or for each pattern within that round the level and stability may be checked. If the stability is less than a preset value, such as for example, 50 standard deviations, then the level may be checked. If the level is greater than the default baseline +/- X deviations, then a possible skimmer is registered. If after a predetermined number of rounds, such as for example five successive rounds, the number of patterns registering a skimmer equates to a preset number, sometimes referred to as a depth, such as for example three successive rounds in five successive rounds, then an unusual object alert can be reported. The unusual object may be a skimmer.

If stability is greater than rain stability, then the pattern may be noisy and possible rain is registered. If after a preset number of rounds such as five rounds, the number of patterns registering rain, sometimes referred to as a depth, equates to a preset number, such as four of five rounds, then the rain may be reported. After reporting, service personnel can check weather data to confirm the presence of rain. If rain is detected by the service personnel, no action is needed. However, if rain is not detected by the service personnel, then a service call can be initiated.

If there has been card activity during the round robin sampling, then the rain detect can reset to round zero. If there is a card in the reader, then no skimmer may be reported until there is no card in the reader.

There are sensors on SSTs that can provide inputs to controllers of the SSTs and the inputs may indicate that a door or fascia covers have been opened, further indicating that a servicing action (e.g., replacing currency cassettes, performance of routine maintenance, etc.) may be in progress. When these inputs return the doors and/or facias have been closed and/or are in a home position, a period of settlement may occur in which there is no reporting of a skimmer. This settlement period may allow for the system to settle especially during period of excessive cold or heat.

Faults may be reported indicating a problem with an individual pattern and/or a problem with the device; the SST in general and/or the specific hardware used to implement skimmer detection. For example, excessive stability readings and/or abnormal level from a particular sensor and/or pattern that relies on a particular sensor may indicate a fault with the particular sensor.

For skimmer and rain reporting the depth and deviation inputs may be varied with preset values. This may allow users to modify the decision and reporting behavior. Alerts and faults may be reported through the SST channels. For example, alerts and faults may be reported through automated teller machine (ATM) transaction and servicing channels.

The above discussion is intended to provide an overview of subject matter of the present patent application. It is not intended to provide an exclusive or exhaustive explanation of the invention. The description below is included to provide further information about the present patent application.

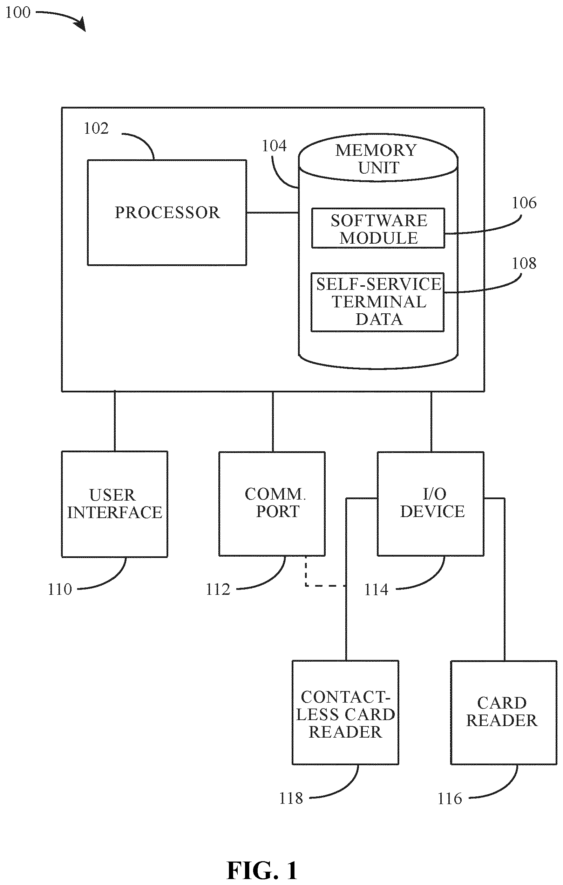

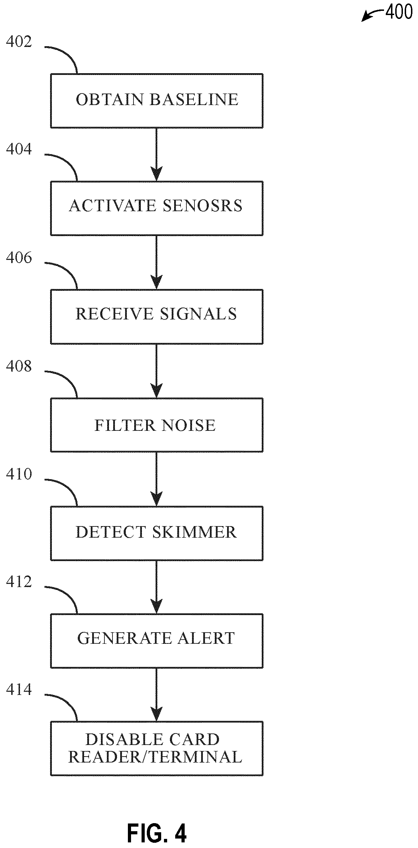

Turning now to the figures, FIG. 1 shows an example schematic of self-service terminal 100. Non-limiting examples of self-service terminal 100 may include self-checkout registers found in brick-and-mortar stores, pumps at gas stations, automated teller machines, self-service kiosks, and any other terminal that may require a user to scan or swipe a card, such as a credit card or debit card to complete a transaction. As shown in FIG. 1, self-service terminal 100 may include a processor 102 and a memory 104. Memory 104 may include a software module 106 and self-service terminal data 108. While executing on processor 104, software module 106 may perform processes for detecting skimming devices, including, for example, one or more stages included in a method 400 described below with respect to FIG. 4. Self-service terminal 100 also may include a user interface 110, a communications port 112, and an input/output (I/O) device 114.

I/O device 114 may include a card reader 116 and a contactless card reader 118. Card reader 116 may be a card reader that requires a user to physical swipe a card in order to enter information stored in a magnetic strip of the card into the self-service terminal. Contactless card reader 118 may be a card reader that extracts information from a card when the card is placed in close proximity to contactless card reader 118. The card information may be transmitted to self-service terminal 100 via short range wireless communications. For example, contactless card reader 118 may be connected to communications port 112 and allow for near field communications, BLUETOOTH^{®} communications, etc. between the users' card and self-service terminal 100.

As disclosed herein, software module 106 may include instructions that when executed by processor 102 that cause self-service terminal 100 to retrieve user information from remotes systems once a user has entered card information via card readers 116 and/or 118. For example, once a user has been authenticated, such as by swiping his or her card via card reader 118 and entering a personal identification number (PIN) via user interface 110, self-service terminal 100 may retrieve account balances, daily withdrawal limits, etc. from a central computer maintained by a financial institution.

Software module 106 may also retrieve and/or store self-service terminal data 108. For example, during sampling of sensors located proximate card readers 116 and 118, software module 106 may retrieve active baselines, permissible standard deviation tolerances, patterns, etc. from self-service terminal data 108. During operations, software module 106 may write new self-service terminal data 108, such as, but not limited to, writing updated active baselines as disclosed herein. Non-limiting examples of self-service terminal data 108 may include active baseline data, preset values for deviations from active baselines, error and/or fault codes, routing instructions for routing the error and/or fault codes, actions to take, such as disabling one or both of card readers 116 and 118, in the event of skimmer detection or other error and/or fault event detection, completely disabling self-service terminal 100 in the event of an error and/or fault event detection, etc.

User interface 110 can include any number of devices that allow a user to interface with self-service terminal 100. Non-limiting examples of user interface 110 include a keypad, a microphone, a display (touchscreen or otherwise), etc. User interface may also operate as an I/O device, such as I/O device 114. For example, user interface may be a touch screen display that displays instructions for a user an accepts inputs from the user via the user touching appropriate buttons displayed on user interface 110.

Communications port 112 may allow self-service terminal 100 to communicate with various information sources and devices, such as, but not limited to, remote computing devices such as servers or other remote computers maintained by financial institutions, mobile devices such as a user's smart phone, peripheral devices, etc. Non-limiting examples of communications port 112 include, Ethernet cards (wireless or wired), BLUETOOTH^{®} transmitters and receivers, near-field communications modules, etc.

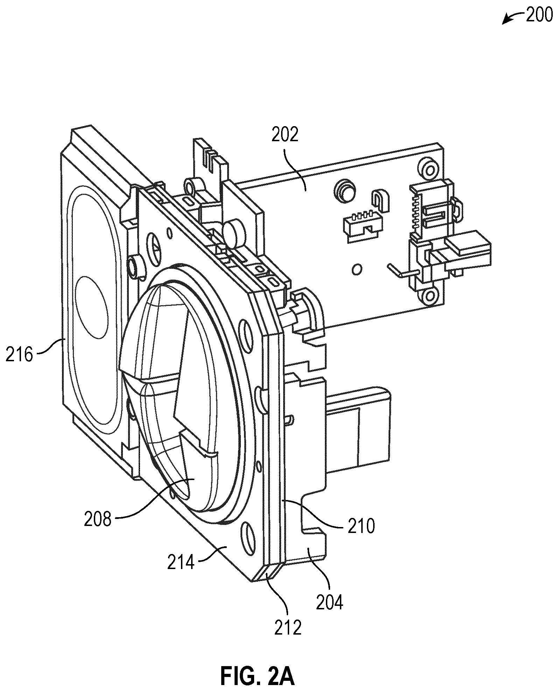

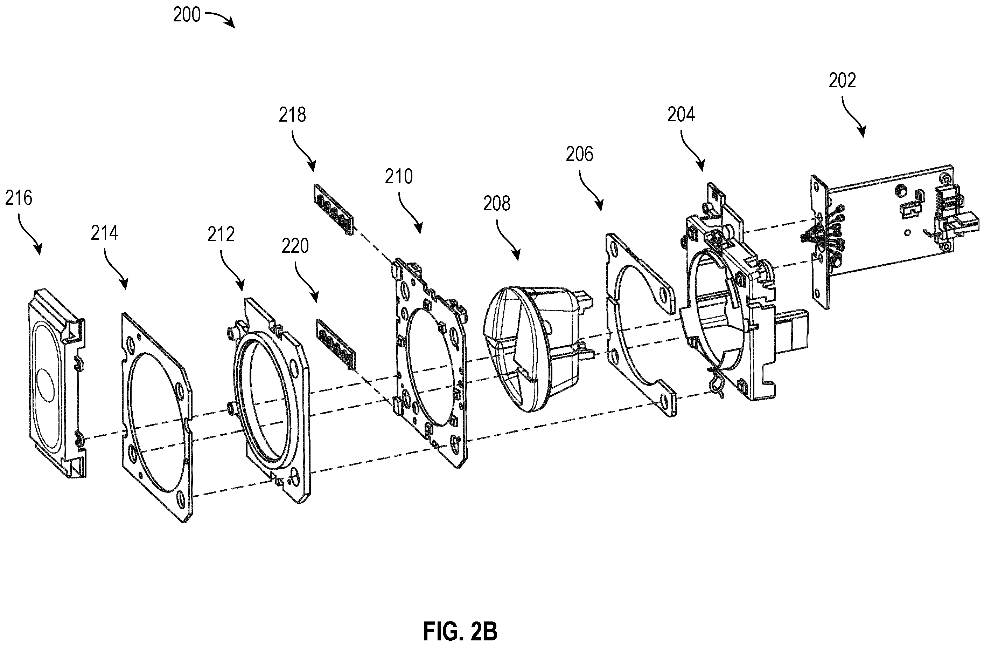

I/O device 114 may allow self-service terminal 100 to receive and output information. Non-limiting examples of I/O device 114 may include card readers 116 and 118, a skimmer detection device 200 (shown at least in FIGS. 2A and 2B), user interface 110, sensors, such as accelerometers, thermistors, thermocouples, etc. for measuring temperature and/or motion, a camera (still or video), fingerprint or other biometric scanners, scales for weighing products, etc.

FIGS. 2A and 2B each shows skimmer detection device 200 consistent with at least one example of this disclosure. Skimmer detection device 200 may include driver board 202, a mounting bracket 204, channel molding 206, a bezel 208, a media enhanced entry indicator board 210, a diffuser 212, an overlay detection board 214, and a contactless card reader 216.

Driver board 202 may include a processor and memory, such as processor 102 and memory unit 104, that can control skimmer detection device 200. For example, driver board 202 may receive instructions from processor 102 and data from memory unit 104 to carryout skimmer detection as disclosed herein. In addition, driver board 202 may include a separate processor and memory unit to carry out skimmer detection as disclosed herein and transmit skimmer detection and/or faults to processor 102.

Mounting bracket 204 may be used to mount skimmer detection device 200 in self-service terminal 100. In addition, the various components of skimmer detection device 200 may be mounted to mounting bracket 204. Channel molding 206 may allow for routing cables, such as co-ax cables used to connect sensors to driver board 202.

Bezel 208 may include electronic components that allow a user to physically swipe a card and/or insert a card into self-service terminal 100. As disclosed herein, bezel 208 may include lights, such as LEDs and/or sensors that are used to detect skimming devices.

Media enhanced entry indicator board 210 may include lights, such as LEDs 218 and 220. Media enhanced entry indicator board 210 may display lights in various patterns to convey information to a user. For example, media enhanced entry indicator board 210 may illuminate LED 218 when a user inserts his or her card and may illuminate LED 220 as an indication that the user should remove his or her card from bezel 208.

Diffuser 212 may be a device that is used to secure bezel 208 to mounting bracket 204. Diffuser 212 may allow for routing of cables, wires, etc. Diffuser 212 may also provide mounting options and/or provided portion for media enhanced entry indicator board 210 and/or LEDs 218 and 220.

Overlay detection board 214 may be mounted to diffuser 212. Overlay detection board 214 may include sensors as disclosed herein that allow for the detection of devices, such as skimmers, that are overlaid onto bezel 208, contactless card reader 216, and/or otherwise located proximate bezel 208 and/or contactless card reader 216 to skim card information.

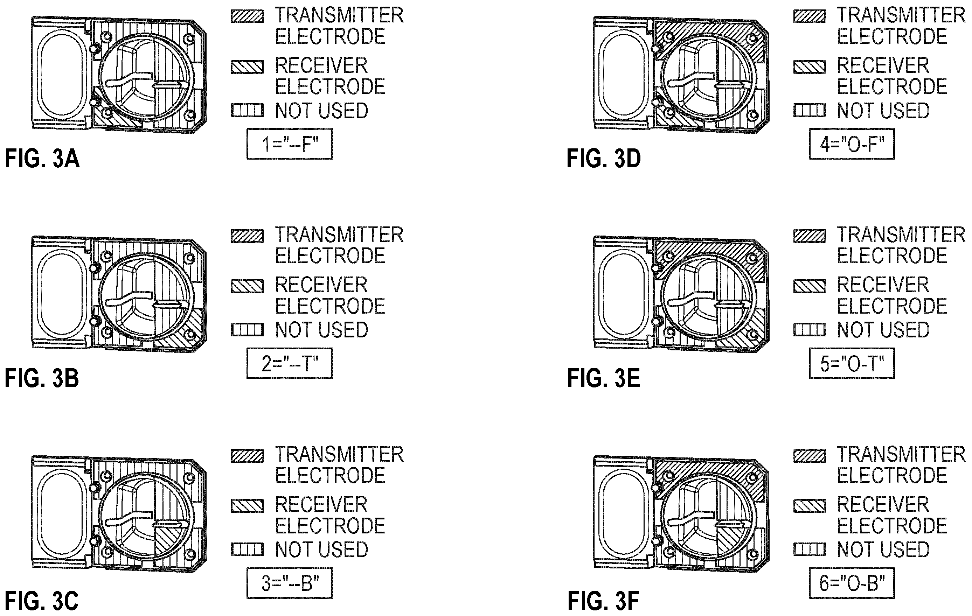

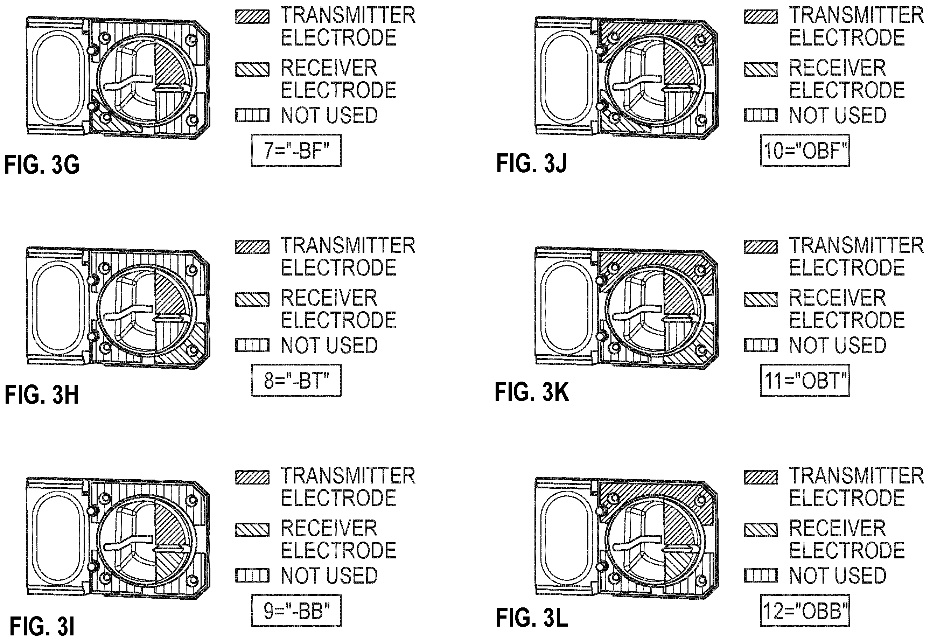

FIGS. 3A through 3L each shows a sensor pattern applied to overlay detection board 214 consistent with at least one example of this disclosure. As shown in FIGS. 3A through 3L, various electrodes 302, 304, 306, 308, and 310 can be integrated into overlay detection board 214. During operation, electrodes 302, 304, 306, 308, and 310 can be activated in various patterns to detect the presence of skimmers. Table 1 illustrates example sensor patterns shown in corresponding FIGS. 3A through 3L. As indicated the sensor patterns can include various combinations of transmit (TX) and receive (RX) electrodes that enable capacitance measurements to be collected. Table 1 also indicated example connections for the various electrodes with general purpose input/output (GPIO) connection on driver board 202.

**Table 1: Channel Pattern Selection & GPIO Connections**

| **RX0** | **RX1** | **RX2** | **TX3** | **TX2** | **TX1** | **TX0** | **Pattern (FIG.)** |
|---|---|---|---|---|---|---|---|
| 0 | 0 | 1 | 0 | 0 | 0 | 0 | 3A |
| 0 | 1 | 0 | 0 | 0 | 0 | 0 | 3B |
| 1 | 0 | 0 | 0 | 0 | 0 | 0 | 3C |
| 0 | 0 | 1 | 0 | 0 | 1 | 1 | 3D |
| 0 | 1 | 0 | 0 | 0 | 1 | 1 | 3E |
| 1 | 0 | 0 | 0 | 0 | 1 | 1 | 3F |
| 0 | 0 | 1 | 1 | 1 | 0 | 0 | 3G |
| 0 | 1 | 0 | 1 | 1 | 0 | 0 | 3H |
| 1 | 0 | 0 | 1 | 1 | 0 | 0 | 31 |
| 0 | 0 | 1 | 1 | 1 | 1 | 1 | 3J |
| 0 | 1 | 0 | 1 | 1 | 1 | 1 | 3K |
| 1 | 0 | 0 | 1 | 1 | 1 | 1 | 3L |

Contactless card reader 216 may be a contactless reader, such as contactless reader 118 described herein. Contactless reader 216 may be attached to mounting bracket 204 as shown in FIGS. 2A and 2B or may be located separately from skimmer detection device 200. When located separately from skimmer detection device 200, cables, wires, etc. may be used to connect any sensors, electrodes, etc. that may be located proximate contactless card reader 216 for detection of skimmers and/or other tampering with contactless card reader 216.

FIG. 4 shows a method 400 for detecting a skimmer device consistent with at least one example of this disclosure. Method 400 may begin at stage 402 where a baseline measurement for a plurality of sensors located proximate the card reader may be obtained. As disclosed herein, the baseline measurement may be an initial baseline that is set at a factory during fabrication of a self-service terminal under controlled conditions. As such, obtaining the baseline measurement may include receiving the baseline measurement from a memory of the self-service terminal or a memory and/or a memory of a driver board.

Also as disclosed herein, the baseline measurement may be obtained during operation of the self-service terminal, such as by updated an initial baseline due to changes in environmental conditions. For example, obtaining the baseline measurement may include receiving a signal from sensors located proximate card readers at regular intervals. The signals may correspond to measurements, such as capacitance vales. Thus, the signal from each of the sensors may represent the baseline measurement and may be saved as a new baseline. For the signals to constitute a new baseline it is presumed that the deviation in the newly received signal does not deviate from a previous received signal or previously received number of signals, such as for example, the previous 10 signals received. By limiting the deviation in the new signal large changes in signal value that may be indicative of a skimmer being placed proximate a card reader are not mistakenly saved as a new baseline. Stated another way, the change in signal values, such as capacitance measurement may be restricted to a preset deviation over a predetermined time, predetermined number of samples, etc. to reduce the likelihood that a skimmer can installed and mistaken as a weather related change in measured values.

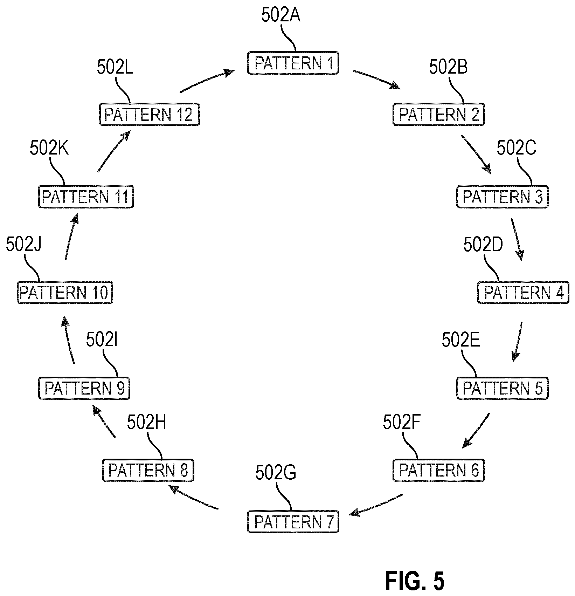

Once the baseline is received or established, method 400 may proceed to stage 402 wherein one or more sensors may be activated. For example, the various sensors may be activated such that one, all, or any subset of the sensors are activated to obtain measurement values. The pattern in which sensors are activated may be preprogrammed into a number of patterns, such as the patterns shown in FIGS. 3A through 3L. The various patterns can be sampled in a round robin manner as shown in FIG. 5. For example, FIG. 5 shows various patterns 502A through 502L (collectively patterns 502) as detailed in Table 1. During round robin sampling each of patterns 502 can be sampled successively to obtain measured capacitance values. As disclosed herein, each of patterns 502 may correspond to different test patterns. By having different test patterns method 400 and the various systems disclosed herein may detect different skimmer configurations and/or skimmers placed in different locations proximate skimmer detection device 200.

After activating one or more sensors, a signal from each of sensor activated, sometimes referred to as a subset of the plurality of sensors that were activated, may be received (406). The received signals may be voltages, currents, or other electrical signals. A processor, such as processor 102 may convert the signals to a measurement, such as a capacitance measurement using lookup tables and/or calibration equations that may be stored in and retrieved from a memory, such as memory unit 204 as part of self-service terminal data 108.

Prior to converting the signals to a measure and/or after converting the signals to a measurement noise maybe filtered from the signals and/or measurements (408). For example, during rain or while a user is using the self-service terminal, the various signals and/or measurements may generate noise due to temporary contact from a user's fingers and/or rain contacting a card reader and/or sensor. Because the deviations in signals and/or measurements may be temporary due to the temporary nature of the contact, they may generate noise that can be filtered. Filtering the signals or measurements may be done using filtering circuity, such a high, low, and bandpass filters. Software may also be included as part of software module 106 and/or self-service data 108 that can implement filtering algorithms such as Fourier transforms, infinite impulse response (IRR) or finite impulse response (FIR) discrete-time and/or digital filters, etc.

Using the received signals and/or measurements, a determination may be made that a skimmer is located proximate the card reader (410). For example, when the signals and/or measurements form one or more, possibly each, of a subset of the sensors deviates from the baseline measurement by a predetermined threshold a determination may be made that a skimmer is located proximate the card reader. The predetermined threshold can be a preset value, such as a multiple of standard deviations from the baseline measurement. The deviations can be for a time period greater than a preset time period. For example, the deviations from the baseline may be 10, 20, 30, 40, 50, 60, 70, 80, etc. standard deviations for a time period exceeding 10, 20, 30, 40, 50, 60, 80, 120, etc. seconds.

More than one pattern may be used to confirm detection of a skimmer. For example, pattern 1 may indicate the presence of a skimmer, but none of the other patterns may indicate a detection of a skimmer. To avoid false positives, before a determination that a skimmer is present a predetermined number of patterns, such as say 3, 5, a majority of the patterns, etc., may be required to indicate the presence of a skimmer before an alter is generated (412) and/or the card reader and/or self-service terminal is disabled (414).

Once a skimmer is detected, an alter message may be generated (412). The alert message may be transmitted to service and/or security personnel for review and action. For example, for an ATM that is connected to a bank, the alert message may prompt a bank employee to quickly check the ATM for the tampering and/or the presence of a skimmer. If one is located the employee can quickly remove the device before customer data is compromised.

If the self-service terminal is not attached to a bank or readily accessible by service personnel, then the self-service terminal may be disabled (414). Disabling the self-service terminal may include disabling the card reader that a user physical inserts his or her card into while leaving a contactless card reader operational to allow for limited use of the self-service terminal until an inspection can be performed. Disabling the self-service terminal may also include completely disabling all card readers and displaying an out of service message on a display to notify users the self-service terminal is unavailable for use.

As disclosed herein various stages of method 400 may be rearranged and/or omitted without departing from the scope of this disclosure. For example, an alert message may be transmitted (412) after a self-service terminal is disabled (414). The filtering of noise (408) may be omitted.

## Claims

1. A method for detecting a skimmer located proximate a card reader (116) of a self-service terminal (SST) (100), the method comprising:
obtaining a baseline measurement for a plurality of sensors located proximate the card reader (116);
activating a subset of the plurality of sensors;
receiving a signal from each of the subset of the plurality of sensors that were activated;
determining that the skimmer is located proximate the card reader (116) when the signal from each of the subset of the plurality of sensors deviates from the baseline measurement by a predetermined threshold; and
disabling the self-service terminal (100) in response to determining that the skimmer is located proximate the card reader (116);
wherein obtaining the baseline measurement comprises receiving a signal from each of the sensors, the signal from each of the sensors representing the baseline measurement.

2. The method of claim 1, wherein the baseline measurement comprises a capacitance value for each of the plurality of sensors.

3. The method of claim 1, wherein the predetermined threshold comprises a change in a capacitance measure over a predetermined time.

4. The method of claim 1, wherein disabling the self-service terminal (100) comprise disabling the card reader (116).

5. The method of claim 1, further comprising transmitting an alert message.

6. The method of claim 1, further comprising filtering noise from the signal received from each of the subset of the plurality of sensors.

7. A skimmer detection system (200) comprising:
a processor (102); and
a memory (104) storing instructions that, when executed by the processor (102), causes the processor (102) to perform actions comprising:
obtaining a baseline measurement for a plurality of sensors located proximate a card reader (116) of a self-service terminal (100);
activating a subset of the plurality of sensors;
receiving a signal from each of the subset of the plurality of sensors that were activated;
determining that a skimmer is located proximate the card reader (116) when the signal from each of the subset of the plurality of sensors deviates from the baseline measurement by a predetermined threshold; and **characterized in that** the processor performs the action disabling the self-service terminal (100) in response to determining that the skimmer is located proximate the card reader (116);
wherein obtaining the baseline measurement comprises receiving a signal from each of the sensors, the signal from each of the sensors representing the baseline measurement.

8. The skimmer detection system of claim 7, wherein the baseline measurement comprises a capacitance value for each of the plurality of sensors.

9. The skimmer detection system of claim 7, wherein activating the subset of the plurality of sensors comprises activating the subset of the plurality in a round robin manner.

10. The skimmer detection system of claim 7, further comprising transmitting an alert message.

11. A self-service terminal (SST) (100) comprising:
a card reader (116);
a plurality of sensors located proximate the card reader (116);
a processor (102) in electrical communication with the plurality of sensors; and
a memory (104) storing instructions that, when executed by the processor (102), causes the processor (102) to perform actions comprising:
receiving a baseline measurement for the plurality of sensors ;
activating a subset of the plurality of sensors;
receiving a signal from each of the subset of the plurality of sensors that were activated;
determining that a skimmer is located proximate the card reader (116) when the signal from each of the subset of the plurality of sensors deviates from the baseline measurement by a predetermined threshold over a predetermined time; and **characterized in that** the processor performs the action
disabling the self-service terminal (100) and transmitting an alert message in response to determining that the skimmer is located proximate the card reader (116);
wherein receiving the baseline measurement comprises receiving a signal from each of the sensors, the signal from each of the sensors representing the baseline measurement.

12. The self-service terminal of claim 11, wherein the plurality of sensors comprises a plurality of capacitance sensors and the baseline measurement comprises a capacitance value for each of the plurality of capacitance sensors.

13. The self-service terminal of claim 11, wherein activating the subset of the plurality of sensors comprises activating the subset of the plurality in a round robin manner.

## Patentansprüche

1. Verfahren zum Erkennen eines Skimmers, der sich in der Nähe eines Kartenlesers (116) eines Selbstbedienungsterminals (SST) (100) befindet, wobei das Verfahren Folgendes umfasst:
Erhalten einer Anfangsmessung für eine Mehrzahl von Sensoren, die sich in der Nähe des Kartenlesers (116) befinden;
Aktivieren einer Teilmenge der Mehrzahl von Sensoren;
Empfangen eines Signals von jedem der Teilmenge der Mehrzahl von Sensoren, die aktiviert wurden;
Bestimmen, dass der Skimmer in der Nähe des Kartenlesers (116) angeordnet ist, wenn das Signal von jedem der Teilmenge der Mehrzahl von Sensoren um einen vorbestimmten Schwellenwert von der Anfangsmessung abweicht; und
Deaktivieren des Selbstbedienungsterminals (100) in Reaktion auf das Bestimmen, dass sich der Skimmer in der Nähe des Kartenlesers (116) befindet;
wobei das Erhalten der Anfangsmessung ein Empfangen eines Signals von jedem der Sensoren umfasst, wobei das Signal von jedem der Sensoren die Anfangsmessung darstellt.

2. Verfahren nach Anspruch 1, wobei die Anfangsmessung einen Kapazitätswert für jeden der Mehrzahl von Sensoren umfasst.

3. Verfahren nach Anspruch 1, wobei der vorbestimmte Schwellenwert eine Änderung in einem Kapazitätsmaß über einen vorbestimmten Zeitraum umfasst.

4. Verfahren nach Anspruch 1, wobei das Deaktivieren des Selbstbedienungsterminals (100) ein Deaktivieren des Kartenlesers (116) umfasst.

5. Verfahren nach Anspruch 1, ferner umfassend das Senden einer Alarmnachricht.

6. Verfahren nach Anspruch 1, ferner umfassend das Filtern von Rauschen aus dem Signal, das von jedem der Teilmenge der Mehrzahl von Sensoren empfangen wird.

7. Skimmerdetektionssystem (200), umfassend:
einen Prozessor (102); und
einen Speicher (104), der Anweisungen speichert, die bei Ausführung durch den Prozessor (102) den Prozessor (102) zur Ausführung von Aktionen veranlassen, umfassend:
Erhalten einer Anfangsmessung für eine Mehrzahl von Sensoren, die sich in der Nähe eines Kartenlesers (116) eines Selbstbedienungsterminals (100) befinden;
Aktivieren einer Teilmenge der Mehrzahl von Sensoren;
Empfangen eines Signals von jedem der Teilmenge der Mehrzahl von Sensoren, die aktiviert wurden;
Bestimmen, dass sich ein Skimmer in der Nähe des Kartenlesers (116) befindet, wenn das Signal von jedem der Teilmenge der Mehrzahl von Sensoren um einen vorbestimmten Schwellenwert von der Anfangsmessung abweicht; und **dadurch gekennzeichnet, dass** der Prozessor die Aktion des Deaktivierens des Selbstbedienungsterminals (100) in Reaktion auf das Bestimmen, dass sich der Skimmer in der Nähe des Kartenlesers (116) befindet, durchführt;
wobei das Erhalten der Anfangsmessung ein Empfangen eines Signals von jedem der Sensoren umfasst, wobei das Signal von jedem der Sensoren die Anfangsmessung darstellt.

8. Skimmerdetektionssystem nach Anspruch 7, wobei die Anfangsmessung einen Kapazitätswert für jeden der Mehrzahl von Sensoren umfasst.

9. Skimmerdetektionssystem nach Anspruch 7, wobei das Aktivieren der Teilmenge der Mehrzahl von Sensoren ein Aktivieren der Teilmenge der Mehrzahl in einer umlaufenden Art und Weise umfasst.

10. Skimmerdetektionssystem nach Anspruch 7, ferner umfassend das Senden einer Alarmnachricht.

11. Selbstbedienungsterminal (SST) (100), umfassend:
einen Kartenleser (116);
eine Mehrzahl von Sensoren, die sich in der Nähe des Kartenlesers (116) befinden;
einen Prozessor (102) in elektrischer Kommunikation mit der Mehrzahl von Sensoren; und
einen Speicher (104), der Anweisungen speichert, die bei Ausführung durch den Prozessor (102) den Prozessor (102) zur Ausführung von Aktionen veranlassen, umfassend:
Empfangen einer Anfangsmessung für die Mehrzahl von Sensoren;
Aktivieren einer Teilmenge der Mehrzahl von Sensoren;
Empfangen eines Signals von jedem der Teilmenge der Mehrzahl von Sensoren, die aktiviert wurden;
Bestimmen, dass sich ein Skimmer in der Nähe des Kartenlesers (116) befindet, wenn das Signal von jedem der Teilmenge der Mehrzahl von Sensoren über einen vorbestimmten Zeitraum um einen vorbestimmten Schwellenwert von der Anfangsmessung abweicht; und **dadurch gekennzeichnet, dass** der Prozessor die Aktion des Deaktivierens des Selbstbedienungsterminal (100) und Sendens einer Alarmnachricht in Reaktion auf das Bestimmen, dass sich der Skimmer in der Nähe des Kartenlesers (116) befindet, durchführt;
wobei das Empfangen der Anfangsmessung ein Empfangen eines Signals von jedem der Sensoren umfasst, wobei das Signal von jedem der Sensoren die Anfangsmessung darstellt.

12. Selbstbedienungsterminal nach Anspruch 11, wobei die Mehrzahl von Sensoren eine Mehrzahl von Kapazitätssensoren umfasst und die Anfangsmessung einen Kapazitätswert für jeden der Mehrzahl von Kapazitätssensoren umfasst.

13. Selbstbedienungsterminal nach Anspruch 11, wobei das Aktivieren der Teilmenge der Mehrzahl von Sensoren ein Aktivieren der Teilmenge der Mehrzahl in umlaufender Weise umfasst.

## Revendications

1. Procédé de détection d'un copieur de carte situé à proximité d'un lecteur de carte (116) d'un terminal libre-service (SST) (100), le procédé comprenant :
l'obtention d'une mesure de ligne de base pour une pluralité de capteurs situés à proximité du lecteur de carte (116) ;
l'activation d'un sous-ensemble de la pluralité de capteurs ;
la réception d'un signal à partir de chacun du sous-ensemble de la pluralité de capteurs qui ont été activés ;
la détermination que le copieur de carte est situé à proximité du lecteur de carte (116) lorsque le signal provenant de chacun du sous-ensemble de la pluralité de capteurs s'écarte de la mesure de ligne de base d'un seuil prédéterminé ; et
l'invalidation du terminal en libre-service (100) en réponse à la détermination du fait que le copieur de carte est situé à proximité du lecteur de carte (116) ;
dans lequel l'obtention de la mesure de ligne de base comprend la réception d'un signal provenant de chacun des capteurs, le signal provenant de chacun des capteurs représentant la mesure de ligne de base.

2. Procédé selon la revendication 1, dans lequel la mesure de ligne de base comprend une valeur de capacité pour chacun de la pluralité de capteurs.

3. Procédé selon la revendication 1, dans lequel le seuil prédéterminé comprend un changement dans une mesure de capacité sur un temps prédéterminé.

4. Procédé selon la revendication 1, dans lequel l'invalidation du terminal libre-service (100) comprend l'invalidation du lecteur de carte (116).

5. Procédé selon la revendication 1, comprenant en outre la transmission d'un message d'alerte.

6. Procédé selon la revendication 1, comprenant en outre le filtrage du bruit du signal reçu provenant de chacun du sous-ensemble de la pluralité de capteurs.

7. Système de détection de copieur de carte (200) comprenant :
un processeur (102) ; et
une mémoire (104) qui stocke des instructions qui, lorsqu'elle est exécutée par le processeur (102), amène le processeur (102) à réaliser des actions comprenant :
l'obtention d'une mesure de ligne de base pour une pluralité de capteurs situés à proximité d'un lecteur de carte (116) d'un terminal libre-service (100) ;
l'activation d'un sous-ensemble de la pluralité de capteurs ;
la réception d'un signal à partir de chacun du sous-ensemble de la pluralité de capteurs qui ont été activés ;
la détermination du fait qu'un copieur de carte est situé à proximité du lecteur de carte (116) lorsque le signal provenant de chacun du sous-ensemble de la pluralité de capteurs s'écarte de la mesure de ligne de base d'un seuil prédéterminé ; et **caractérisé en ce que** le processeur réalise l'action d'invalidation du terminal libre-service (100) en réponse à la détermination du fait que le copieur de carte est situé à proximité du lecteur de carte (116) ;
dans lequel l'obtention de la mesure de ligne de base comprend la réception d'un signal provenant de chacun des capteurs, le signal provenant de chacun des capteurs représentant la mesure de ligne de base.

8. Système de détection de copieur de carte selon la revendication 7, dans lequel la mesure de ligne de base comprend une valeur de capacité pour chacun de la pluralité de capteurs.

9. Système de détection de copieur de carte selon la revendication 7, dans lequel l'activation du sous-ensemble de la pluralité de capteurs comprend l'activation du sous-ensemble de la pluralité d'une manière cyclique.

10. Système de détection de copieur de carte selon la revendication 7, comprenant en outre la transmission d'un message d'alerte.

11. Terminal libre-service (SST) (100) comprenant :
un lecteur de carte (116) ;
une pluralité de capteurs situés à proximité du lecteur de carte (116) ;
un processeur (102) en communication électrique avec la pluralité de capteurs ; et
une mémoire (104) qui stocke des instructions qui, lorsqu'elle est exécutée par le processeur (102), amène le processeur (102) à réaliser des actions comprenant :
la réception d'une mesure de ligne de base pour la pluralité de capteurs ;
l'activation d'un sous-ensemble de la pluralité de capteurs ;
la réception d'un signal à partir de chacun du sous-ensemble de la pluralité de capteurs qui ont été activés ;
la détermination du fait qu'un copieur de carte est situé à proximité du lecteur de carte (116) lorsque le signal provenant de chacun du sous-ensemble de la pluralité de capteurs s'écarte de la mesure de ligne de base d'un seuil prédéterminé sur une durée prédéterminée ; et **caractérisé en ce que** le processeur réalise l'action d'invalidation du terminal libre-service (100) et la transmission d'un message d'alerte en réponse à la détermination du fait que le copieur de carte est situé à proximité du lecteur de carte (116) ;
dans lequel la réception de la mesure de ligne de base comprend la réception d'un signal provenant de chacun des capteurs, le signal provenant de chacun des capteurs représentant la mesure de ligne de base.

12. Terminal libre-service selon la revendication 11, dans lequel la pluralité de capteurs comprend une pluralité de capteurs capacitifs et la mesure de ligne de base comprend une valeur de capacité pour chacun de la pluralité de capteurs capacitifs.

13. Terminal libre-service selon la revendication 11, dans lequel l'activation du sous-ensemble de la pluralité de capteurs comprend l'activation du sous-ensemble de la pluralité d'une manière cyclique.
